# EUROPEAN PATENT SPECIFICATION

(11) **EP 1 927 087 B1**
(45) Date of publication and mention of the grant of the patent: **17.11.2010**
(21) Application number: 06818245.0
(22) Date of filing: 08.09.2006
(51) Int. Cl.: G07F 7/10, G06K 19/07

(54) **A DYNAMIC TRANSACTION CARD AND A METHOD OF WRITING INFORMATION TO THE SAME**
DYNAMISCHE TRANSAKTIONSKARTE UND VERFAHREN ZUM DARAUFSCHREIBEN VON INFORMATIONEN
CARTE DE TRANSACTION DYNAMIQUE ET PROCEDE PERMETTANT D'ECRIRE DES INFORMATIONS SUR CETTE CARTE

(30) Priority: 08.09.2005 EP 05077062
(43) Date of publication of application: 04.06.2008
(60) Divisional application: 10183580.9
(73) Proprietor: Cardlab ApS, 1432 Kobenhavn K (DK)
(72) Inventor: DOMSTEN, Rune, DK-2700 Brønshøj (DK); NIELSEN, Finn, DK-2300 Copenhagen S (DK)
(74) Representative: Inspicos A/S
(86) International application number: PCT/EP2006/008781
(87) International publication number: WO 2007/028634

(56) References cited:
- WO-A-01/31577
- US-A- 4 791 283
- US-A1- 2002 153 424
- US-B1- 6 206 293

## Description

### FIELD OF THE INVENTION

The present invention relates to a transaction card. In particular the present invention relates to a transaction card comprising a processor connected to a coil for detecting a magnetic field comprising information to be recorded into a memory of the card. Moreover, the present invention relates to a method of operating the transaction card so as to store information into the card.

### BACKGROUND OF THE INVENTION

Dynamic transaction cards are described in US 6,206,293, US 4,791,283, US 2002/153424, DE-A-196 48 767, DE-C-196 18, WO01/31577, WO01/52204, WO00/49561, EP-A-0 994 439, US 2004/0133787, EP-A-1 231 562, US-A-5,627,355, US 2003/0106935, US-A-4,158,433, CA 2,317,642, GB-B-2 243 235, GB-2-398 152, US4,701,601, US-2002/139844, US-2004/111378 and US6,883,717.

### DETAILED DESCRIPTION OF THE INVENTION

In a first aspect the present invention relates to a transaction card comprising a processor connected to at least one coil, the processor being adapted to:
- receive a signal output by the coil caused by a magnetic field acting on the coil,
- derive, from the signal, information relating to the card,
- store the information, and
- subsequently transmit, to the surroundings, the information by transmitting a corresponding signal to the coil.

The transaction card may be a payment card, such as a credit card or a debit card, or may be an identification card, such as an access card. Instead of, or as a supplement to, a strip of a permanently magnetic material, the transaction card comprises one or more coils and possibly an inductive element as will be described further below. Moreover, the credit card may be a smart card having one or more contacts surfaces defined on an outer surface of the card for electrically connecting a card reading device with the processor.

The information derived by and/or stored to and/or transmitted from the card may comprise information relating to a user of the card, such as a name, an address, a phone number, a social security number, a deposit account number, a card number, an date on which the card expires, a Card Verification Code (CW-code), biometric information, a picture of the user, a security level defining which parts of a building/structure the user may have access to or which kinds of vehicles the user is allowed to drive, etc.

The processor may be integrated into the card, e.g. by being laminated or molded into the card, or may be provided on an outer surface of the card. The processor may be any type of microcontroller or FPGA. In order to allow the transaction card to store information, the processor may comprise an internal and/or an external memory, such as a RAM, PROM, EPROM, EEROM, Flash or the like.

In the present invention means for determining a magnetic field are described as coils, however the present invention covers any other means suitable for determining a magnetic field, such as presence sensors, magnet activatable contacts, etc.

In order to receive signals from the coil(s), the processor is electrically connected to the coil, and, thus, a current induced in the coil is electrically detestable by the processor. In a first embodiment the transaction card comprises at least two coils, each of which is used to read/write a predetermined kind of information to the processor. As an example a first of the two coils may be used for a first transaction system, such as a European transaction system, while a second of the coils may be used for a second transaction system, such as an American transaction system. In one embodiment each transaction system is designated to a predetermined longitudinal area of the transaction card, wherein the coils are provided. The longitudinal areas may extend in a general direction of the transaction card and may be positioned next to each other, such as within less than half the width of one of the longitudinal areas.

In a first coil embodiment, the coil comprises one or more windings extending in a general plane of the transaction card, i.e. a centre axis of the winding(s) extend in a direction transverse to the general plane of the card, such as substantially at a right angle to the general plane of the card.

In the first coil embodiment, the transaction card may comprise at least one coil, with elongated winding(s), the widest part of which may be wider than 50 percent of the longest dimension of the transaction card, such as longer than 75 percent, such as longer than 80 percent, such as longer than 90 percent. In use, the magnetic fields, generated by or at the elongated coil, may be varied over time depending on the position of a reading and/or recording head as will be described in further detail below.

In a second coil embodiment, the transaction card may comprise a plurality of coils provided on a line extending in the longitudinal direction of the transaction card. As described in connection with the first coil embodiment, the coils of the second coil embodiment may comprise one or more windings extending in a general plane of the transaction card.

The coils of the second coil embodiment may be individually controllable. Moreover, the distance between the centre axes of two of the coils may correspond to the distance between two bits on a conventional transaction card with a magnetic strip, whereby each coil in use may be used to record one bit of information, or to reproduce one bit of information.

In a third coil embodiment, at least a part of the coil defines a centre axis extending in the general plane of the transaction card. Consequently, opposed to the first and second coil embodiments, the magnetic field provided by this coil (when provided with a signal), will be in the plane of the card and not out of the plane as is the case in the two other embodiments. Naturally, this means that this coil embodiment is adapted to better to couple to and detect magnetic fields directed along the plane of the card. This is the situation in most card readers and writers in that the structure of the reading/writing head thereof has a horse-shoe shaped inductive element providing (or optimized for sensing) a magnetic field between the ends thereof - in the plane of the card when the reader/writing head is translated along the surface of the card at the position of the magnetic strip or coil(s).

In any of the three coil embodiments, the transaction card may comprise at least one inductive element, (each of) which is provided inside a coil. In the context of the present invention, the term "inductive element" shall be understood as an element capable of conducting a magnetic field. In one embodiment, the windings of the coil are provided around a limited part of the inductive element, such as around an end part of the conductive element. Alternatively, all of or most of the length of the inductive element may be covered with or engage windings.

In the third coil embodiment, the inductive element may extend in a general plane of the transaction card and inside one or more windings of the coil. Furthermore in the third coil embodiment, the coil may be encircle a limited part of the inductive element, and may be provided at one end of the inductive element. Preferably, windings are positioned over at least a majority of a length of the inductive element.

The processor is adapted to receive a signal output by the coil due to a magnetic field acting on the coil. The received magnetic field may be modulated in time or relate to a position relative to the inductive element and/or the coil. Additionally, the processor is adapted to derive, from the signal, information relating to the card. When deriving the information, the processor may be adapted to demodulate the received signal according to a predetermined demodulation scheme. Moreover, the processor may be adapted to check the signal, the demodulated signal or the information for errors e.g. by means of a checksum, such as a CRC-checksum.

Moreover, the processor may be adapted to store the derived information in the abovementioned internal and/or external memory. The information may be stored temporarily or permanently. In one embodiment, at least a part of the memory is a write-once memory which may be used to store the information recorded by the transaction card, during recording of information to the card, as is described in further detail below.

The stored information may subsequently be transmitted to the surroundings, by transmitting a corresponding signal to the coil. Accordingly, the processor may be adapted to modulate the stored information and a modulated signal to the coil, whereby a magnetic field is generated by the coil. In one embodiment of the processor, the processor is adapted to prevent transmission of certain parts of the stored information such as encryption algorithms, checksum algorithms and verification codes.

During recording, the transaction card may be subjected to one or more recording sequences, wherein information detected via the coil is stored in the processor. In the context of the present invention the term "recording sequence" shall be understood as a recording cycle, wherein information corresponding to the information stored in a magnetic strip of a conventional transaction card, is recorded or attempted recorded into the transaction card.

Similarly during reading, the transaction card may be subjected to one or more reading sequences, wherein information stored in the processor is output via the coil. In the context of the present invention the term "reading sequence" shall be understood as a reading cycle, wherein information corresponding to the information stored in a magnetic strip of a conventional transaction card, is read or attempted read from the transaction card.

When recording information onto a magnetic strip of a conventional credit/transaction card, the information is stored onto physical positions on the card as the magnetic strip is magnetised. When recording information onto transaction cards of the present invention, the information is not stored onto physical positions on the card, but rather into the memory of the processor by means of the coil(s) and/or the inductive element. Accordingly, in order to enable the processor to re-create the information stored by means of the coils, the processor may be adapted to establish, e.g. estimate or determine, at one or more points in time, one or more position(s) of a card reading and/or recording means relative to the transaction card and/or the coil. In one embodiment the processor is adapted to store for each bit of information recorded, the position, along the coil/inductive element, wherein the information was stored onto the card.

It will be appreciated that in order to correlate the stored information with a position, the processor of transaction card must have access to information relating to the position of the reading/recording head relative to the transaction card. This information may be provided by the recording device, or the transaction card may be adapted to determine or estimate the position of the recording/reading devices.

In a first embodiment, the transaction card may comprise a plurality of magnet sensors and/or proximity sensors, spaced along the length of the card, each of which is adapted to determine a passage of the recording/reading device. Such sensors may be provided by means of the abovementioned plurality of coils which are provided on a line along the card. Alternatively, sensors for this purpose may be used in any of the embodiments.

In another embodiment, the transaction card may comprise means for estimating a velocity of the transaction card and/or the coil relative to the card reading and/or recording means. The estimating means may be adapted to detect a change in a self inductance of a coil of the transaction card. This coil may be the coil(s) used for recording/reading information to/from the transaction card, or one or more separate coils or other magnetic field sensors (or other type of proximity sensor) may be provided for determining the relative velocity between the card and recording/reading heads.

The estimating means may be adapted to estimate, for one or more points in time, one or more position(s) of the card reading/recording means relative to the card/coil, on the basis of the estimated velocity and a point in time wherein the card reading/recording means passed a reference position on the card/coil. This may be done by determining the time elapsed since the reading/recording means passed the estimating means, whereby the relative movement between the card and the recording/reading means may be calculated based on the elapsed time and the estimated velocity.

As discussed above, the transaction card may preferably be adapted to output signals (corresponding to information) at substantially the same position along the card, wherein the signals (information) were detected during recording of the signal. Accordingly, the processor may be adapted to be operated in a reading mode and a recording mode, wherein: in the recording mode, the processor, for at least a part of, such as all, the information detected by the coil, is adapted to estimate a writing position of the card recording means relative to the transaction card and/or the coil, and to store said part of the information and said estimated writing position; and in the reading mode, wherein the processor is adapted to estimate a reading position of the card reading means and to output said part of the information to the coil, when the estimated position of the card reading means relative to the transaction card and/or the coil, is substantially identical to said estimated writing position.

Alternatively, the processor may be adapted to be operated in a reading mode and a recording mode, wherein: in the recording mode, the processor, for at least a part of, such as all, the information detected by the coil, is adapted to determine a time elapsed since the card recording means passed a predetermined position on the card/coil, and to store said part of the information and said determined time; and in the reading mode, wherein the processor is adapted to determine a time elapsed since the card reading means passed said predetermined position on the card/coil, and to output said part of the information to the coil, when the determined time elapsed since the reading head passed said predetermined position is substantially identical to the stored determined time.

In order to prevent that recorded information is overwritten, the processor may be adapted to be operated in a non-recording mode, wherein signals from the coil is not interpreted by the processor or at least no received information is stored in the card. In most embodiments, the transaction card will be changed from the recording mode to the non-recording mode when the intended information is stored onto the card. Accordingly, the processor may be adapted to change from the recording mode to the non-recording mode upon determination of a predetermined number of recording sequence(s), such as one successful recording sequence.

In some embodiments, the transaction card is verified by the recording device subsequently to one or more, such as each, recording sequence. Accordingly, the processor may be changed from the recording to the non-recording mode upon determination of a predetermined number of reading sequence(s).

Alternatively, or as a supplement, the processor may be changed to the non-recording mode upon determination of a predetermined signal detected by means of a signal detecting means of the transaction card, such the coil. Said signal may be emitted by the recording device upon a (successful) recording/reading sequence or when the transaction card is ejected from/by the recording device.

In yet another alternative/supplement, the transaction card may be adapted to change to the non-recording mode after a predetermined period of time e.g. calculated from a predetermined reading and/or recording sequence and/or the point in time of loading the card into the recording device and/or a point in time of a successful verification of the data recorded into the card.

Before use of the transaction card or between uses thereof, the card may be adapted to be operated in a secure mode, wherein confidential information, such as a CVV-code, received by the card cannot be output by the processor.

In order to change the transaction card from the secure mode to the (non-secure) reading mode, the transaction card may comprise a biometric scanner adapted to determine at least one biometric property of a user of the transaction card. Moreover, the processor may be adapted to prevent operation of the reading mode unless at least one scanned biometric property corresponds to a corresponding biometric property of a user of the transaction card. The biometric property may be a finger print from one or more fingers of a user of the card. Alternatively, the biometric property may be information relating to a retina of a user.

In order to change the transaction card from the secure mode to the reading mode, the user may place a finger on the biometric scanner, which then establishes a scanned image of the finger print. Subsequently, the processor may relate the established finger print to a stored finger print, which was stored into the processor by the user in connection with activation of the card. If the two finger prints correspond to each other, the card may be changed to the reading mode for a predetermined period of time or until it has been subjected to a reading sequence.

Having been successfully written to, and if not activated by e.g. a finger print, the card may be adapted to, such upon detection of a signal (push button, detection of a reading head) output identity information relating to the owner of the card. In this manner, it may be ensured at the manufacturer that the card is transmitted to the correct owner, and a lost and found card may be sent to the correct owner - without confidential being revealed.

The invention according to the first aspect of the invention may comprise any feature or element of the invention according to the second and/or third aspect of the invention.

In a second aspect the present invention relates to a method of storing information on a transaction card comprising a processor connected to at least one coil, the processor:
- receiving a signal output by the coil caused by a magnetic field acting on the coil,
- deriving, from the signal, information relating to the card,
- storing the information, and
- subsequently transmitting, to the surroundings, the information by transmitting a corresponding signal to the coil.

The transaction card of the second aspect of the invention may comprise any feature or element of the transaction card of the first or third aspect of the invention. Moreover, the method may comprise steps corresponding to what the transaction card of the first and third aspect of the invention is adapted to. As an example transaction card of the first aspect of the invention may be adapted to be operated in a non-recording mode, wherein signals from the coil are not interpreted by the processor or wherein signals from the coil is not converted to data and stored on the card. Accordingly the method according to the second aspect of the invention, may comprise the step of operating the transacting card in a non-recording mode, wherein signals from the coil is not interpreted by the processor.

The receiving step may comprise the step of: moving a card recording means, providing the magnetic field, along the transaction card and/or the coil; and determining at one or more points in time, one or more position(s) of the card recording means relative to the transaction card and/or the coil.

On way of determining the position of the recording/reading head, is by estimating the relative speed between the recording/reading head and the card/coil as well as determining a point in time when the head passes a predetermined position on the card/coil. Accordingly, the step of receiving may comprise the step of: estimating a velocity of the transaction card and/or the coil relative to a card reading and/or recording means.

In order to determine the speed, the receiving step may comprise the step of: detecting a change in a self inductance of the coil or another coil and estimating the velocity on the basis of the change and a period of time over which the change took place.

Moreover, the receiving step may comprise the step of: estimating for one or more points in time, one or more position(s) of the card reading and/or recording means relative to the transaction card and/or the coil, on the basis of the estimated velocity and a point in time wherein the card reading and/or recording means passed a reference position on the transaction card and/or the coil.

In the method according to the second aspect of the invention, the velocity of the recording/reading heads may be determined by means of the alternatives described under the first aspect of the invention. One example is determining the time elapsing from the recording/reading head(s) passes a first sensor until it passes a second sensor of the transaction card.

In order to determine the position of the recording means/head relative to the card/coil, the step of deriving may comprise estimating a writing position of a card recording means relative to the transaction card and/or the coil, for at least a part of the information detected by the coil and wherein the step of storing may comprise the step of storing said part of the information and said estimated position. Preferably, the position of all bits to be represented on a magnetic strip are stored.

Furthermore, the transmitting step may comprise outputting said part of the information to the coil, when an estimated position of a card reading means relative to the transaction card and/or the coil, is substantially identical to said estimated writing position. Thus, all bits then may be output at the same positions, so as to emulate a standard magnetic strip vis-à-vis the reading means.

The processor may be adapted to be operated in a recording mode, wherein the processor is adapted to interpret a magnetic field acting on the coil as information. In one embodiment the step of receiving may comprise a step of operating the processor in the recording mode.

Moreover, the processor may be adapted to be operated in a non-recording mode, wherein signals from coil are not interpreted by the processor or wherein no data generated from such signals are stored on the card. The step of receiving and/or the step of deriving and/or the step of storing and/or the step of transmitting may comprise the step of operating the processor in the non-recording mode. As an alternative, the method may comprise a step, subsequent to the storing step and preceding the transmitting step, of operating the processor in the non-recording mode.

The processor may be adapted to be subjected to one or more recording sequence(s) wherein information detected via the coil is stored in the processor. Each recording sequence may comprise the step of receiving and/or the step of deriving and/or the step of storing. Additionally, the processor may be adapted to be subjected to one or more reading sequence(s) wherein information stored in the processor is output via the coil. Each reading sequence may comprise the transmitting step and/or the step of operating the processor in the reading mode.

Moreover, the method may comprise the step of changing the operational mode of the processor from the recording mode to the non-recording mode on the basis of at least one of: a predetermined number of recording sequence(s), and/or a predetermined number of reading sequence(s), and/or a predetermined signal detected by means of the coil, and/or a predetermined period of time elapsed since a predetermined reading and/or recording sequence and/or a predetermined period of time elapsed since the card was loaded into the recording device and/or a predetermined period of time elapsed since the card was changed from the non-recording mode to the recording mode.

The method may comprise the subsequent step of receiving additional information and operating the processor in a secure mode wherein the processor prevents outputting of the additional information.

In order to ensure that only a predetermined person or persons may use the transaction card, the card may comprise a biometric scanner adapted to determine at least one biometric property such as a finger print. Moreover, the step of transmitting may comprises:
- scanning a biometric material such as a finger or a retina with the biometric scanner, which may be provided on an outer surface of the card,
- deriving, from a signal received from the biometric scanner, information relating to the biometric material,
- comparing the information relating to the biometric material signal with a information relating the owner of the transaction card, and
- allowing transmission to the coil, of data stored in the processor, if the compared information correlate with each other.

In one embodiment the transaction card may be authenticated by performing the steps of
- generating a card specific series of random bit segments in a predetermined sequence;
- storing at least said series of bit segments in a predetermined sequence in first storage means on said credit card, which further comprises a processor in communication with said first storage means;
- storing the same series of bit segments in the predetermined sequence in an authentication database;
- selecting from said series of bit segments stored on said first storage means at least one single-service bit segment based on said predetermined sequence;
- emitting from said dynamic magnetic stripe a card data signal comprising at least said at least one single-service bit segment to an authenticator;
- comparing said at least one single-service bit segment with the bit segment in the predetermined sequence stored in said authentication database; and
- authenticating the transaction if said comparison is positive.

### DESCRIPTION OF THE FIGURES

In the following the invention is described in further detail with reference to the drawings in which:
Fig. 1 discloses a transaction card according to an embodiment of the invention, and
Fig. 2 discloses a transducer coil of a transaction card positioned in the vicinity of a card reader/recorder.

In relation to the description of the figures, the term "coil" is used as a generalized term covering the coil and possibly an inductive element provided in a coil. Moreover, the term "coil" also covers any other means of determining or generating a magnetic field

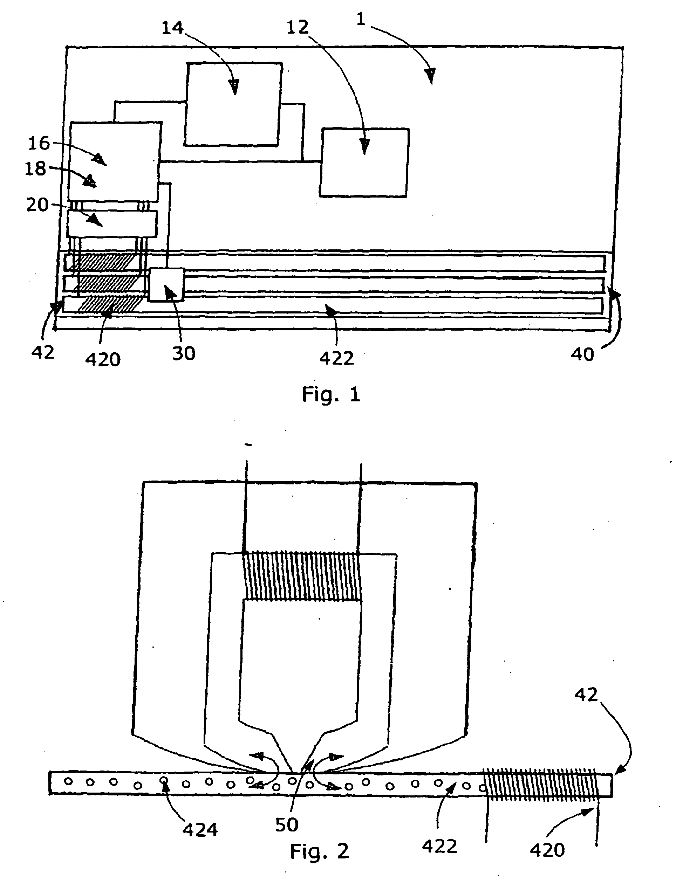

In Fig. 1, a credit card according to the invention is shown in a preferred embodiment, which comprises a card body 1, comprising a battery 12 supplying electrical current to fingerprint reading means 14, fingerprint authentication means 16 comprising a memory 18, such as an EEPROM, and a data processor such as a microcontroller, and a readout area 40.

The fingerprint authentication means 16 may be adapted to compare fingerprint signals received from said fingerprint reading means 14 with card owner fingerprint data stored in said memory 18 in order to, during a determined time interval, submit signals corresponding to secure data also stored in said memory 18 through a driver circuit 20 also provided on said card body 1 onto a readout area 40 on said card body 1 for transmission of said secured data signals. In most embodiments, no secured data are emitted from said readout area 40 outside said determined activation time interval.

The readout area 40 may comprise three transducer coils 42, of which one is shown in more detail in Fig. 2, each comprising a number of core windings 420 wound around an end section of a strip 422 of electromagnetically inducible core material. The coils of Figs. 1 and 2, are provided in the third coil embodiment described in the aforementioned. Each transducer coil 42 may be individually inducible by said driver circuit 20. The number of transducer coils may be chosen to three in order to induce secured data signals corresponding to conventional magnetic strip information, which lies in magnetic strips in three tracks, but may as an alternative be provided in numbers ranging from one to more than three.

For most applications, data is only to be generated In two transducer coils 42, corresponding to the first and second of said conventional magnetic strips. In conventional magnetic strips, the data is permanently magnetically presented to a credit card reader using a so-called F2F-format, or two frequency format, In which a "0"-bit is formed by a predetermined length in said magnetic strip with the same direction of the magnetic field, and a "1"-bit is two longitudinally positioned parts with oppositely directed magnetic fields, having a combined length equal to said length of the "0"-bit magnet part. One conventional magnet track is usually provided with 1210 bits/inch. Thus, the transducer coils 42 of the credit card and secured data activation system according the present invention may be adapted to transmit and present said secured data signals In such F2F-format to a credit card reader, which is to read said credit card with a reader head 50.

The coil 42 could produce a homogenous and relatively strong magnetic field in order for it to be readable by a credit card reader. The nature of this magnetic field is heavily influenced by the transducer coil construction, such as choice of core material and core construction of the strips 422, number and position of the core windings 420 upon the strips 422. Variations In the signals to a transducer coil 42 generates a variable magnetic field along the strip, which is identical to the magnetic field, which a reader head is influenced by, when a conventional magnetic strip credit card holding the same secured data is passed through the same reader.

The material of the core strip 422 is advantageously an electromagnetically inducible material, such as metal, preferably electromagnetic lamination, sheet iron or other sheet metal, either provided as a single or double foil on one or each side of the card body, advantageously having a width and a position corresponding to a conventional magnetic track in order to have a similar magnetic and physical appearance. The choice of core material of the core strips strongly influences the strength and distribution of the magnetic field produced, and allow for an enhancement of the magnetic field being produced, resulting in the need for lower current in the core windings, which reduces the power consumption of said credit card.

The core strip 422 may be provided with "imperfections", such as distributed air gaps 424, or contaminations of another less or more electromagnetically inducible material, such as plastic or paper, either provided along the extent of the core material or inside the card body in order for the transducer coil to produce several small magnetic fields along the core material to provide a homogenous magnetic field distribution for facilitating improved readability by a read gap of a credit card reader being used on the credit card according to the invention. Without such air gaps, the strongest part of the magnetic field may have a tendency to flow from one end of the core strip to the other end thereof and accordingly away from a read gap of a magnetic reader head of a credit card reader.

The term "core strip" is to be understood as indicating substantially elongated parts of core material, thus also comprising several successively positioned relatively small or large core material sections and/or one integral core material section, having a relatively small or large thickness of material layer and having suitably dimensioned widths and heights for producing a magnetic field of a desired strength, homogeneity and extent.

It has been found that providing the core windings 420 of the transducer coil 42 on an end section of the electromagnetically inducible core strip 422 is able to provide a homogenous magnetic field being emitted by the entire readout area 40. Providing said core windings 420 on one end section of said core strips 422 as seen if Figs. 1 and 2 also helps to reduce magnetic interferences between the core windings 420 provided on said credit card and the reader head 50 of a credit card reader. Thus, the provision of the core windings 420 of the respective three transducer coils 42 may alternatively advantageously be provided consecutively in opposite end sections. Obviously, the core windings of said transducer coil may also alternatively be provided evenly distributed along the core strip extension, or may be distributed in one or more sections of said core strip or sections thereof. The core windings 420 are preferably provided around the short side of the core strip 422 and may be provided in any appropriate number relating to desired magnetic field strength, current load of the core windings, magnetic appearance, etc. Obviously, the core windings are of a material, which is able to induce a magnetic field into said inducible core strips, e. g. a metal like iron or another suitable conducting material.

By the invention it has been realized that such an "activatable magnetic strip" in the readout area may be useful for other applications, in which secured data from a magnetic strip requires an input before being activated, e. g. automatic employee attendance systems, individualized Internet shop cards, ID-badges etc. Said input is not limited to fingerprint authentication, but may also be retina, signature, or other authentication, or may even be a simple push button input, and may be from any person, not only the person or entity to which said secured data relates to. A secured data activation system is therefore also disclosed herein, shown as an example being such a credit card with fingerprint authentication.

In Fig. 1, the credit card shown is further comprising a sweep detection sensor 30, which is positioned at one of said transducer coils 42 for the detection of a credit card reader 50, when the credit card according to the invention is in the vicinity of such a reader, i.e. when said sensor 30 is adjacent to a pick-up reader head 50 of a credit card reader. Such a sweep detection sensor 30 may comprise at least one sensor winding (not shown) provided around one of said core strips 422. In use, the sweeping of the credit card through a credit card reader will induce a current in said at least one sensor winding, because said pick-up head 50 is magnetic and the card or head is moving, which is sensed by the sweep detection sensor 30. Other sweep detection sensors, which may alternatively be used comprise: A) a switch, which is closed, when a reader head of a credit card reader is in the vicinity of said sensor, or B) two conductors, which short circuit when the reader head of a credit card reader is passed by in the vicinity of said sensor, or any other suitable sweep detection or proximity sensor means. The advantage of a sweep detector sensor being present is that at least the beginning of the activation time period and also the duration of said time period can be determined based on the input from said sensor.

As an alternative, more than one sweep detection sensor may be provided, e. g. one at each end section of a transducer coil or alternatively at each end section of the readout area, as to feed the data processor with Information as to at which end of the transducer coil the secure data set is to begin based on said reader head vicinity detection.

In another embodiment, the sweep detection sensor or sensors detect the velocity with which it or they pass the pick-up head, and this information is fed to the data processor, which in turn determines the onset and duration of the activation time period necessary to communicate the secured data signals to the credit card reader.

This is especially advantageous when using the credit card according to the invention in ATM-type machines, because the duration of the transmission of the secured data signals is reduced to the communication time period only and the read velocity in a conventional ATM is often preset to a constant or well defined system preset velocity. When card owner fingerprints are registered by said fingerprint reading means 14 the submittal of secured data to said transducer coils 42 may be enabled for a determined time period. During said time period, the secured data signals are only emitted from the readout area, when and if the sweep detection sensor 30 detects such a proximity of a credit card reader head 50, immediately after which preferably only one transmission of the secured data signals is provided by said readout area 40. This is useful when sweeping said credit card through a credit card reader with a relatively quick movement of said credit card. Alternatively, several transmissions may be performed during said time period. This may be useful when said credit card is left inside said credit card reader for a longer lasting communication period.

In Fig. 2 is shown a conventional credit card reader head 50 reading one transducer coil 42 from a credit card according to the present invention (not shown). The credit card reader decodes the data being emitted by a credit card, upon which the coil is situated, preferably according to certain standards of presenting credit card data known to the skilled person, such as the ISO 7811 standard. In said standard, a protocol is used comprising a start sentinel, 76 alphanumeric characters comprising an initial format code and field separators between data parts, an end sentinel, and a longitudinal redundancy check character. The coils of the credit card may preferably generate secured data as described above in order to comply with such given standards.

Initially the virgin transaction card is not designated to a specific user and/or purpose, and information must be recorded into the processor/ memory of the transaction card in a controlled manner in order to achieve such designation.

In a first embodiment, the processor of the transaction card must be changed from a non-recording mode to a recording mode in order to allow data to be recorded into a memory of the transaction card. This provides the advantage, that the transaction card may be operated in a power-saving non-recording mode prior to recording of data into the memory. The processor of the transaction card may be changed from the non-recording mode to the recording mode by activation of a button provided on an outer surface of the transaction card. Alternatively, the processor of the transaction card may be changed from the non-recording mode to the recording mode upon detection of a predetermined signal by the processor. In a second embodiment, the processor of the transaction card is constantly operated in the recording mode until data is recorded into the processor/the memory of the transaction card.

In order to record data into the processor/memory, the transaction card may be loaded into a suitable recording device, such as a DATACARD^{®} 9000. The recording device may comprise at least one recording head for recording information into the processor/memory via one or more of the coil(s) of the transaction card and at least one reading head for reading information stored in the processor/memory - also via the one or more coils(s) of the card. The recording device may comprise means for changing the transaction card from the non-recording mode to the recording mode. Moreover, the recording device may be adapted to change the transaction card from the recording mode to the non-recording mode as will be described in further detail below. The recording device may comprise means for moving the transaction card relative to the recording and/or reading head(s), such that a magnetic field generated by the recording/reading head acts on the coil(s) of the transaction card and such that a magnetic field generated by the coil(s) may act on the recording/reading head. By moving the transaction card relative to the reading and/or recording head of the recording device, bits may be stored onto the transaction card by being physically separated and not recorded/read onto/from the same position of the transaction card.

Furthermore, the recording device may comprise means for determining the position of the transaction card relative to the reading and/or recording head(s). The means for determining the position of the transaction card may comprise means for identifying an edge of the transaction card and means for determining/estimating a velocity of a moving transaction card.

Based on information relating to velocity of the transaction card and a point in time when the edge passes the edge-identifying means, the position of a reading and/or recording heads relative to the transaction card may be estimated. This may be used to ensure, that predetermined information is stored onto predetermined positions of the transaction card. It will be appreciated that in the case of a dynamic transaction card, this predetermined information is stored into the processor/memory of the transaction card and not onto physical positions on a coil/inductive element of the transaction card.

The transaction card may be adapted to establish, at one or more point(s) in time, one or more position(s) of the recording and/or reading head relative to the card/coil. Moreover, the transaction card may be adapted to store the detected pieces of information and information relating to the corresponding positions along the card/coil. By storing both the information and the associated positions of the information, it is subsequently possible to emulate a conventional transaction card. The emulation may be achieved by outputting the stored information to the coil(s) in such a way, that for any position of the reading head relative to the transaction card, the output information corresponds to the information detected at substantially the same position on the card when recording to the card(s). Depending on the design of the transaction card this may be achieved in different ways, as will be described below in relation to reading of the transaction card.

In order to store information and its corresponding position, the transaction card is adapted to estimate the position of the reading and/or recording head. Accordingly, the transaction card may comprise a means for estimating a velocity In the form of a swipe detection sensor 30, which is adapted to estimate the velocity of a recording and/or a reading head along the coil of the transaction card. The swipe detection sensor 30 is used to estimate a velocity of the recording and/or reading head, relative to a predetermined position on the transaction card. It will be appreciated, that prior and/or subsequent positions of the reading and/or recording head may be estimated, based on the velocity at the reference position and the time elapsed since the velocity was measured.

In a first embodiment the swipe detection sensor comprises a first and second means for determining a reading/recording head, and the time elapsing between passage, of the same reading/recording head, from the first to the second means may be used to determine the velocity of the recording/reading head, using information about the distance between the first and second means. In another embodiment, a swipe detection sensor is adapted to determine changes in self inductance over time, when a recording/reading head Is moved towards or along a coil of the sweep sensor. In the latter embodiment, the velocity of the recording/reading head is determined by analyzing the changes in the self inductance, e.g. by determining the width of a curve representing the self inductance as a function of time. In most embodiments such a curve may comprise a V- or U-shaped curve, where the bottom of the curve represents the recording/reading head passing the sweep sensor and the width of the V- or U-shaped curve is indicative for the velocity of the reading/recording head. As an example the width may be determined by means of the Full width at half maximum"-method, i.e. the distance between points on the V- or U-curve at which the curve reaches half its maximum value.

The swipe detection sensor 30 may be provided at any position of the transaction card, but preferably in the vicinity of one or more of the coils. In the embodiment of Fig. 1 the swipe detection sensor 30 comprises at least one winding encircling one of the inductive elements. In most embodiments, the swipe detector is provided in the first or one of the first areas which the reading/recording head contacts upon reading/recording.

### Recording - chase one (initializing the recording process)

A transaction card is loaded into the recording device which changes the card into the recording mode if necessary, cf. the abovementioned discussion about change between non-recording mode and recording mode. The recording device determines the position of the transaction card relative to the recording head and when the coil of the transaction card is positioned in a predetermined position relative to the recording head, the recording head is operated to create a magnetic field whereby a current is induced in the coil.

### Recording - phase two (transaction card with one coil in the longitudinal direction - the first/third coil embodiment)

Upon detection of a signal from the coil, the transaction card initiates a recording of information into the processor/memory of the card. During recording, the processor derives information from the signal output by the coil and stores the relevant information in the memory of the transaction card. At the same time, the transaction card estimates a position of the recording head relative to the coil (and/or a time elapsed since the recording head passed a predetermined position on the coil) and stores, for any piece of information, a position along the coil/card, wherein the information was detected. The processor continues to record information until the recording head has reached a predetermined position relative to the transaction card and/or a predetermined time has elapsed and/or the magnetic field from the recording head is below a predetermined threshold.

### Recording - phase two (transaction card with a plurality of coils in the longitudinal direction - the second coil embodiment)

Relative to the above description of recording of information to a transaction card having one coil, the difference of this embodiment is that each coil along the longitudinal direction of the device is used to determine the information to be recorded at said location of the coil and that the processor is adapted to store for each coil the information detected by the coil and the location of the coil.

### Recording - phase three (finalizing the recording process)

When the recording device has terminated the recording operation, a reading head of the recording device may in some embodiments be swiped along the coil of the transaction card in order to verify the stored data.

In a first embodiment, the recording device is adapted to change the processor of the transaction card from the recording mode to the non-recording mode upon termination of the recording operation. In one embodiment of the transaction card, information can only be read from the card when the processor is operated in the non-recording mode, while in other embodiments information can be read from the card both in the recording and the non-recording modes. In the both embodiments, the processor may be adapted to output the stored information upon determination of a predetermined reading signal from a card reading head of e.g. a recording device or an automatic teller machine. The processor may be changed from the recording mode to the non-recording mode upon determination of predetermined number of recording and/or reading sequence(s). Alternatively, or as a supplement, the processor may be adapted to change to the non-recording mode upon detection of a predetermined signal e.g. transmitted from the recording device to the processor via the coil. In yet another alternative, the processor is adapted to change to the non-recording mode after a predetermined period of time. By changing the transaction card to the non-recording mode, fraught may be avoided as the information stored in the processor cannot be changed.

Moreover, the recording device may be adapted to change the transaction card to a secure mode wherein no information or only a limited part of the information stored in the transaction card may be retrieved by means of a card reading device. In order to activate the card (and thus change the card from the secure mode to a non-secure mode), the user may be required to activate the card by loading biometric information such as information relating to a finger print, into the memory/processor of the device.

### Reading from the transaction card initial steps

In order to be able to use the card in a card reading device, the user must operate the card such that the processor is operated in a reading mode, wherein information may be read from the card by a card reading device. In a first embodiment user may initiate the reading mode by bringing the biometric scanner into contact with a predetermined biometric material such as a finger print. Upon identification of the correct finger print the processor will be operated in the reading mode, whereby at least a part of the stored information may be read by the card reading device. Alternatively, the transaction card may comprise a push button on an outer surface which may be pressed in order to operate the processor in the reading mode. In yet another alternative, the transaction card may upon identification of a predetermined signal such as an electromagnetic signal, operate the processor in the reading mode. In still a further embodiment, the processor automatically is operated in the reading mode upon termination of a recording to the processor.

### Reading from the transaction card with one coil in the longitudinal direction

when the transaction card is loaded into the card reading device, such as an ATM, the swipe sensor may detect a reading head passing the swipe sensor, and estimate the velocity of the reading head relative to the coil. Subsequently, the swipe sensor may estimate the position of the reading head, on the basis of a point in time when the read head passes the swipe sensor and the time elapsed since passage of the reading head relative to the swipe sensor. When the reading head is positioned in a predetermined position, the processor is adapted to output a signal to the coil corresponding to the signal detected by means of the coil, when the recording head was positioned in the same position, during recording of information to the card. When the recording head is moved to another position information related to this position is output via the coil. In one embodiment, the position of the reading head (at which the process of outputting is initiated) need not be the same, as the position at which the recording was initiated, but rather the transaction card is adapted to initiate the outputting of information for any position of the reading head. In another embodiment, the processor is adapted to output a signal corresponding to reading of a magnetic strip in a period of time which is shorter than the time it takes the card reading device to move the reading head along the coil by the reading device. The latter embodiment allows the reading device to speed up the reading process.

### Reading from a transaction card with a plurality of coils in the longitudinal direction

In embodiments comprising a plurality of coils provided in the longitudinal direction of the device, the processor, upon detection of a reading head or by being operated in the reading mode, is adapted to subject each of the coils to a current corresponding to the signal detected by said coil during recording of information from the coil. Accordingly, the coils generate a virtual magnetic strip identical to a conventional magnetic strip, as the magnetic field at any position is constant and not changed in response to movement of a reading head along the transaction card.

The recording device will in most embodiments, record information relative to a predetermined position of the card, such as an edge of the card. However, due to manufacturing tolerances, the coils may not be positioned is exactly the same positions on any two different cards. Accordingly in most situations, the recording device may for any recording position along the card attempt to store information at a position between two neighboring coils. In such cases both or all coils may be used to record the information. Upon subsequent validation of the recorded information by the recording device, both or all coils may again be used to recreate the stored information at the position between the coils. This allows the recording device to validate, that the correct information has been stored at predetermined positions along the transaction card. However, as card reading machines e.g. an ATM, are not operated to validate that the information is recorded in specific positions, the coils may subsequently be operated to generate the information at the position of the coils and not at positions between the coils. This allows the processor to generate, via the coils, a virtual magnetic strip identical to a conventional magnetic strip, as is described above.

## Claims

1. A transaction card comprising a processor connected to at least one coil, the processor being adapted to:
- receive a signal output by the coil caused by a magnetic field acting on the coil, derive, from the signal, information relating to the card,
- store the information,
establish, at one or more points in time, one or more position(s) of a card reading and/or recording means relative to the transaction card and/or the coil, and
- subsequently transmit, to the surroundings, the information by transmitting a corresponding signal to the coil,
wherein the processor is adapted to be operated in a reading mode and a recording mode, and wherein:
- in the recording mode, the processor, for at least a part of the information detected by the coil, is adapted to estimate a writing position of the card recording means relative to the transaction card and/or the coil, and to store said part of the information and said estimated writing position, and
- in the reading mode, the processor is adapted to estimate a reading position of the card reading means and to output said part of the information to the coil, when the estimated position of the card reading means relative to the transaction card and/or the coil, is substantially identical to said estimated writing position.

2. A transaction card according to claim 1, wherein the processor is adapted to
- be subjected to one or more recording sequence(s) wherein information detected via the coil is stored In the processor, and
- be subjected to one or more reading sequence(s) wherein information stored in the processor is output via the coil.

3. A transaction card according to claim 1 or 2, wherein the coil comprises one or more windings extending in a general plane of the transaction card.

4. A transaction card according to any of claims 1-3, wherein at least a part of the coil defines a centre axis extending In a general plane of the transaction card.

5. A transaction card according to claim 4, further comprising an inductive element extending in a general plane of the transaction card and inside one or more windings of the coil.

6. A transaction card according to any of the preceding claims, further comprising means for estimating a velocity of the transaction card and/or the coil relative to a card reading and/or recording means.

7. A transaction card according to claim 6, wherein the estimating means is adapted to detect a change in a self inductance of the coil.

8. A transaction card according to any of claims 6-7, wherein the estimating means is adapted to estimate, for one or more points in time, one or more posltion(s) of the card reading and/or recording means relative to the transaction card and/or the coil, on the basis of the estimated velocity and a point in time wherein the card reading and/or recording means passed a reference position on the transaction card and/or the coil.

9. A transaction card according to claim 1, wherein the processor, when operated in the recording mode, is adapted to interpret a magnetic field acting on the coil as information, and wherein the processor furthermore is adapted to be operated in a non-recording mode wherein signals from coil are not interpreted by the processor.

10. A transaction card according to claim 9, wherein the processor is adapted to change from the recording mode to the non-recording mode:
- upon determination of a predetermined number of recording sequence(s), and/or
- upon determination of a predetermined number of reading sequence(s), and/or
- upon determination of a predetermined signal detected by means of the coil, and/or
- after a predetermined period of time elapsed since a predetermined reading and/or recording sequence.

11. A transaction card according to any of the preceding claims, wherein the transaction card is adapted to receive additional information which subsequently is not output when the processor is operated in a secure mode.

12. A transaction card according to any of claims 1, 9, 10, or 11, further comprising a biometric scanner adapted to determine at least one biometric property, and wherein the processor is adapted to prevent operation of the reading mode unless at least one scanned biometric property corresponds to a corresponding biometric property of a user of the transaction card.

13. A method of storing information on a transaction card comprising a processor connected to at least one coil, the processor:
- receiving a signal output by the coil caused by a magnetic field acting on the coil,
- deriving, from the signal, information relating to the card,
- storing the information, and
- subsequently transmitting, to the surroundings, the information by transmitting a corresponding signal to the coil,
wherein:
- the deriving step comprises: estimating a writing position of a card recording means relative to the transaction card and/or the coil, for at least a part of the information detected by the coil,
- the step of storing comprises the step of storing said part of the information and said estimated position, and
- the transmitting step comprises: outputting said part of the information to the coil, when an estimated position of a card reading means relative to the transaction card and/or the coil, Is substantially identical to said stored writing position.

14. A method according to claim 13, wherein the receiving step comprises: moving a card recording means, providing the magnetic field, along the transaction card and/or the coil, and determining at one or more points in time, one or more position(s) of the card recording means relative to the transaction card and/or the coil.

15. A method according to claim 13 or 14, wherein the receiving step comprises: estimating a velocity of the transaction card and/or the coil relative to a card reading and/or recording means.

16. A method according to claim 15, wherein the receiving step comprises: detecting a change in a self inductance of the coil and estimating the velocity on the basis of the change and a period of time over which the change took place.

17. A method according to claims 15 or 16, wherein the receiving step comprises: estimating for one or more points in time, one or more position(s) of the card reading and/or recording means relative to the transaction card and/or the coil, on the basis of the estimated velocity and a point in time wherein the card reading and/or recording means passed a reference position on the transaction card and/or the coil.

18. A method according to any of claims 13-17, wherein the processor is adapted to be operated in a recording mode, wherein the processor is adapted to interpret a magnetic field acting on the coil as information, and wherein the processor is adapted to be operated in a non-recording mode wherein signals from the coil are not interpreted by the processor.

19. A method according to any of claims 13-18, wherein the processor is adapted to
- be subjected to one or more recording sequence(s) wherein information detected via the coil is stored in the processor, and
- be subjected to one or more reading sequence(s) wherein information stored in the processor is output via the coil.

20. A method according to claim 18 and 19, further comprising the step of: changing the operational mode of the processor from the recording mode to the non-recording mode on the basis of at least one of:
- a predetermined number of recording sequence(s), and/or
- a predetermined number of reading sequence(s), and/or
- a predetermined signal detected by means of the coil, and/or
- a predetermined period of time elapsed since a predetermined reading and/or recording sequence.

21. A method according to any of claims 13-20, wherein the transaction card is adapted to perform the subsequent step of: receiving additional information and operating the processor in a secure mode wherein processor prevents outputting of the additional information.

22. A method according to any of claims 13-21, wherein the transaction card further comprises a biometric scanner adapted to determine at least one biometric property, and wherein the step of transmitting comprises:
- scanning a biometric material with the biometric scanner,
- deriving, from a signal received from the biometric scanner, information relating to the biometric material,
- comparing the information relating to the biometric material signal with a information relating the owner of the transaction card, and
- allowing transmission to the coil, of data stored in the processor, if the compared information correlate.

## Patentansprüche

1. Transaktionskarte mit einem Prozessor, der mit wenigstens einer Spule verbunden ist, wobei der Prozessor dazu eingerichtet ist,
- einen durch ein auf die Spule einwirkendes magnetisches Feld durch die Spule hervorgerufenen Signalausgang zu empfangen, aus dem Signal sich auf die Karte beziehende Information abzuleiten,
- die Information zu speichern, an einem oder mehreren Zeitpunkten an einer oder mehreren Stellen Kartenlese- und/oder -aufzeichnungsmittel in Bezug auf die Transaktionskarte und/oder die Spule einzurichten und
- anschließend an die Umgebung die Information durch Übermitteln eines entsprechenden Signals an die Spule zu übermitteln,
wobei der Prozessor dazu eingerichtet ist, in einem Lesemodus und in einem Aufzeichnungsmodus betrieben zu werden, und wobei
- der Prozessor in dem Aufzeichnungsmodus für wenigstens einen Teil der durch die Spule detektierten Information dazu eingerichtet ist, eine Schreibposition des Kartenaufzeichnungsmittels in Bezug auf die Transaktionskarte und/oder die Spule abzuschätzen und diesen Teil der Information sowie die abgeschätzte Schreibposition zu speichern, und
- wobei in dem Lesemodus der Prozessor dazu eingerichtet ist, eine Leseposition des Kartenlesemittels abzuschätzen und diesen Teil der Information an die Spule auszugeben, wenn die abgeschätzte Position des Kartenlesemittels in Bezug auf die Transaktionskarte und/oder die Spule im Wesentlichen gleich der abgeschätzten Schreibposition ist.

2. Transaktionskarte nach Anspruch 1, bei der der Prozessor dazu eingerichtet ist,
- einer oder mehreren Aufzeichnungsabfolge(n) unterworfen zu werden, wobei über die Spule detektierte Information in dem Prozessor abgespeichert ist, und
- einer oder mehreren Lesesequenz(en) unterworfen zu werden, wobei in dem Prozessor gespeicherte Information über die Spule ausgegeben wird.

3. Transaktionskarte nach Anspruch 1 oder 2, bei der die Spule eine oder mehrere Wicklungen aufweist, die sich in einer Hauptebene der Transaktionskarte erstrecken.

4. Transaktionskarte nach einem der Ansprüche 1 bis 3, bei der wenigstens ein Teil der Spule eine Mittelachse bildet, die sich in einer Hauptebene der Transaktionskarte erstreckt.

5. Transaktionskarte nach Anspruch 4, die weiterhin über ein induktives Element verfügt, das sich in einer Hauptebene der Transaktionskarten innerhalb einer oder mehrerer Windungen der Spule erstreckt.

6. Transaktionskarte nach einem der vorangehenden Ansprüche, die weiterhin über Mittel zum Abschätzen der Geschwindigkeit der Transaktionskarte und/oder der Spule in Bezug auf ein Kartenlese- und/oder -aufzeichnungsmittel verfügt.

7. Transaktionskarte nach Anspruch 6, bei der das Abschätzmittel dazu eingerichtet ist, eine Änderung in einer Selbstinduktivität der Spule zu detektieren.

8. Transaktionskarte nach einem der Ansprüche 6 bis 7, bei der das Abschätzmittel dazu eingerichtet ist, zu einem oder mehreren Zeitpunkten eine oder mehrere Position(en) des Kartenlese- und/oder -aufzeichnungsmittels in Bezug auf die Transaktionskarte und/oder die Spule auf der Grundlage der abgeschätzten Geschwindigkeit und eines Zeitpunktes abzuschätzen, zu dem das Kartenlese- und/oder -aufzeichnungsmittel eine Referenzposition auf der Transaktionskarte und/oder der Spule passiert hat.

9. Transaktionskarte nach Anspruch 1, bei der der Prozessor, wenn er in dem Aufzeichnungsmodus betrieben ist, dazu eingerichtet ist, ein auf die Spule einwirkendes Magnetfeld als Information zu interpretieren, und wobei der Prozessor weiterhin dazu eingerichtet ist, in einem Nicht-Aufzeichnungsmodus betrieben zu werden, bei dem Signale von der Spule durch den Prozessor nicht interpretiert werden.

10. Transaktionskarte nach Anspruch 9, bei der der Prozessor dazu eingerichtet ist, von dem Aufzeichnungsmodus in den Nicht-Aufzeichnungsmodus zu wechseln, und zwar
- bei Feststellen einer vorbestimmten Anzahl von Aufzeichnungssequenzen und/oder
- bei Feststellen einer vorbestimmten Anzahl von Lesesequenzen und/oder
- bei Feststellen eines mittels der Spule detektierten vorbestimmten Signals und/oder
- nach einer seit einer vorbestimmten Lese- und/oder Aufzeichnungssequenz verstrichenen vorbestimmten Zeitdauer.

11. Transaktionskarte nach einem der vorangehenden Ansprüche, bei der die Transaktionskarte dazu eingerichtet ist, zusätzliche Informationen zu empfangen, die nachfolgend nicht ausgegeben werden, wenn der Prozessor in einem abgesicherten Modus betrieben wird.

12. Transaktionskarte nach einem der Ansprüche 1, 9, 10 oder 11, die weiterhin über eine biometrische Abtasteinheit verfügt, die dazu eingerichtet ist, wenigstens eine biometrische Eigenschaft zu bestimmen, und bei der der Prozessor dazu eingerichtet ist, einen Betrieb in dem Lesemodus zu verhindern, bis wenigstens eine abgetastete biometrische Eigenschaft einer zugeordneten biometrischen Eigenschaft eines Nutzers der Transaktionskarte entspricht.

13. Verfahren zum Speichern von Information auf einer Transaktionskarte, die einen mit wenigstens einer Spule verbundenen Prozessor aufweist, wobei der Prozessor
- einen durch ein auf die Spule einwirkendes Magnetfeld verursachten Signalausgang empfängt,
- aus dem Signal sich auf die Karte beziehende Information ableitet,
- die Information speichert und
- anschließend durch Übermitteln eines entsprechenden Signals an die Spule die Information an die Umgebung übermittelt,
wobei
- der Ableitungsschritt Abschätzen einer Schreibposition eines Kartenaufzeichnungsmittels in Bezug auf die Transaktionskarte und/oder die Spule für wenigstens einen Teil der durch die Spule detektierten Information aufweist,
- der Speicherschritt den Schritt des Speicherns eines Teils der Information sowie der abgeschätzten Position aufweist und
- der Übermittlungsschritt Ausgeben des Teils der Information an die Spule aufweist, wenn eine abgeschätzte Position eines Kartenlesemittels in Bezug auf die Transaktionskarte und/oder die Spule im Wesentlichen gleich der gespeicherten Schreibposition ist.

14. Verfahren nach Anspruch 13, bei dem der Empfangsschritt Bewegen eines Kartenaufzeichnungsmittels, Bereitstellen des Magnetfeldes entlang der Transaktionskarte und/oder der Spule und Bestimmen zu einem oder mehreren Zeitpunkten eine oder mehrere Position(en) des Kartenaufzeichnungsmittels in Bezug auf die Transaktionskarte und/oder die Spule aufweist.

15. Verfahren nach Anspruch 13 oder 14, bei dem der Empfangsschritt Abschätzen der Geschwindigkeit der Transaktionskarte und/oder der Spule in Bezug auf ein Kartenlese-und/oder -aufzeichnungsmittel aufweist.

16. Verfahren nach Anspruch 15, bei dem der Empfangsschritt Detektieren einer Änderung in einer Selbstinduktivität der Spule und Abschätzen der Geschwindigkeit auf der Basis der Änderung und einer Zeitdauer aufweist, während der die Änderung stattgefunden hat.

17. Verfahren nach den Ansprüchen 15 oder 16, bei dem der Empfangsschritt für einen oder mehrere Zeitpunkt(e) Abschätzen einer oder mehrerer Position(en) des Kartenlese-und/oder -aufzeichnungsmittels in Bezug auf die Transaktionskarte und/oder die Spule auf der Grundlage der abgeschätzten Geschwindigkeit und eines Zeitpunktes aufweist, zu dem das Kartenlese- und/oder -aufzeichnungsmittel einen Bezugspunkt auf der Transaktionskarte und/oder der Spule passiert hat.

18. Verfahren nach einem der Ansprüche 13 bis 17, bei dem der Prozessor dazu eingerichtet ist, in einem Aufzeichnungsmodus betrieben zu werden, bei dem der Prozessor dazu eingerichtet ist, ein auf die Spule einwirkendes Magnetfeld als Information zu interpretieren, und bei dem der Prozessor dazu eingerichtet ist, in einem Nicht-Aufzeichnungsmodus betrieben zu werden, bei dem die Signale aus der Spule durch den Prozessor nicht interpretiert werden.

19. Verfahren nach einem der Ansprüche 13 bis 18, bei dem der Prozessor dazu eingerichtet ist,
- einer oder mehrerer Aufzeichnungssequenz(en) unterworfen zu werden, während der/denen über die Spule detektierte Information in dem Prozessor gespeichert wird, und
- einer oder mehrerer Lesesequenz(en) unterworfen zu werden, wobei in dem Prozessor gespeicherte Information über die Spule ausgegeben wird.

20. Verfahren nach Anspruch 18 und 19, das weiterhin den Schritt einer Änderung des Betriebsmodus des Prozessors von dem Aufzeichnungsmodus in den Nicht-Aufzeichnungsmodus auf der Grundlage wenigstens
- einer vorbestimmten Anzahl von Aufzeichnungssequenzen und/oder
- einer vorbestimmten Anzahl von Lesesequenzen und/oder
- eines mittels der Spule detektierten vorbestimmten Signals und/oder
- einer seit einer vorbestimmten Lese- und Aufzeichnungssequenz verstrichenen Zeitdauer
aufweist.

21. Verfahren nach einem der Ansprüche 13 bis 20, bei dem die Transaktionskarte dazu eingerichtet ist, den nachfolgenden Schritt eines Empfangs weiterer Information und Betreiben des Prozessors in einem abgesicherten Modus aufzuweisen, in dem ein Prozessor ein Ausgeben der zusätzlichen Informationen unterbindet.

22. Verfahren nach einem der Ansprüche 13 bis 21, bei dem die Transaktionskarte weiterhin über eine biometrische Abtasteinheit verfügt, die dazu eingerichtet ist, wenigstens eine biometrische Eigenschaft zu bestimmen, und bei dem der Übermittlungsschritt
- Abtasten eines biometrischen Materials durch die biometrische Abtasteinheit,
- aus einem von der biometrischen Abtasteinheit empfangenen Signal Ableiten von sich auf das biometrische Material beziehende Information,
- Vergleichen der sich auf das Signal des biometrischen Materials beziehenden Information mit sich auf den Eigentümer der Transaktionskarte beziehende Information, und
- Gestatten eines Übermittelns der in dem Prozessor gespeicherten Daten zu der Spule, falls die miteinander verglichene Information korreliert,
aufweist.

## Revendications

1. Carte de transaction comprenant un processeur relié à au moins une bobine, le processeur étant agencé pour :
- recevoir un signal de sortie de la bobine provoqué par un champ magnétique agissant sur la bobine, dériver des informations concernant la carte à partir du signal,
- mémoriser les informations,
établir, à un ou plusieurs instants dans le temps, une ou plusieurs position(s) des moyens de lecture et/ou d'enregistrement de carte par rapport à la carte de transaction et/ou la bobine, et
- transmettre ensuite les informations à l'environnement en transmettant un signal correspondant à la bobine,
dans laquelle le processeur est agencé pour fonctionner en mode de lecture et en mode d'enregistrement, et dans laquelle :
- en mode d'enregistrement, pour au moins une partie des informations détectées par la bobine, le processeur est agencé pour estimer une position d'écriture des moyens d'enregistrement de la carte par rapport à la carte de transaction et/ou la bobine, et pour mémoriser ladite partie des informations et ladite position d'écriture estimée, et
- en mode de lecture, le processeur est agencé pour estimer une position de lecture des moyens de lecture de la carte et pour sortir ladite partie des informations vers la bobine lorsque la position estimée des moyens de lecture de la carte par rapport à la carte de transaction et/ou la bobine est substantiellement identique à ladite position d'écriture estimée.

2. Carte de transaction selon la revendication 1, dans laquelle le processeur est agencé pour
- être soumis à une ou plusieurs séquence(s) d'enregistrement lors desquelles des informations détectées par la bobine sont mémorisées dans le processeur, et
- être soumis à une ou plusieurs séquence(s) de lecture lors desquelles des informations mémorisées dans le processeur sont sorties via la bobine.

3. Carte de transaction selon la revendication 1 ou 2, dans laquelle la bobine comprend un ou plusieurs enroulements s'étendant dans un plan général de la carte de transaction.

4. Carte de transaction selon l'une quelconque des revendications 1-3, dans laquelle au moins une partie de la bobine définit un axe central s'étendant dans un plan général de la carte de transaction.

5. Carte de transaction selon la revendication 4, comprenant en outre un élément inductif s'étendant dans un plan général de la carte de transaction et dans un ou plusieurs enroulements de la bobine.

6. Carte de transaction selon l'une quelconque des revendications précédentes, comprenant en outre des moyens pour estimer une vitesse de la carte de transaction et/ou de la bobine par rapport à des moyens de lecture et/ou d'enregistrement de la carte.

7. Carte de transaction selon la revendication 6, dans laquelle les moyens d'estimation sont agencés pour détecter un changement dans une inductance propre de la bobine.

8. Carte de transaction selon l'une quelconque des revendications 6 à 7, dans laquelle les moyens d'estimation sont agencés pour estimer, pour un ou plusieurs instants dans le temps, une ou plusieurs position(s) des moyens de lecture et/ou d'enregistrement de la carte par rapport à la carte de transaction et/ou la bobine, sur la base de la vitesse estimée et d'un instant dans le temps dans lequel les moyens de lecture et/ou d'enregistrement de la carte ont passé une position de référence sur la carte de transaction et/ou la bobine.

9. Carte de transaction selon la revendication 1, dans laquelle le processeur, lorsque celui-ci fonctionne en mode d'enregistrement, est agencé pour interpréter un champ magnétique agissant sur la bobine comme étant une information, et dans laquelle le processeur est en outre agencé pour fonctionner en mode de non-enregistrement dans lequel des signaux en provenance de la bobine ne sont pas interprétés par le processeur.

10. Carte de transaction selon la revendication 9, dans laquelle le processeur est agencé pour passer du mode d'enregistrement au mode de non-enregistrement :
- d'après la détermination d'un nombre prédéterminé de séquence(s) d'enregistrement, et/ou
- d'après la détermination d'un nombre prédéterminé de séquence(s) de lecture, et/ou
- d'après la détermination d'un signal prédéterminé détecté au moyen de la bobine, et/ou
- après qu'une période prédéterminée soit écoulée depuis une séquence de lecture et/ou d'enregistrement prédéterminée.

11. Carte de transaction selon l'une quelconque des revendications précédentes, dans laquelle la carte de transaction est agencé pour recevoir des informations supplémentaires qui ensuite ne sortent pas lorsque le processeur fonctionne en mode sécurisé.

12. Carte de transaction selon l'une quelconque des revendications 1, 9, 10 ou 11, comprenant en outre un scanner biométrique agencé pour déterminer au moins une propriété biométrique, et dans laquelle le processeur est agencé pour empêcher le fonctionnement en mode de lecture sauf si au moins une propriété biométrique scannée correspond à une propriété biométrique correspondante d'un utilisateur de la carte de transaction.

13. Procédé pour mémoriser des informations sur une carte de transaction comprenant un processeur relié à au moins une bobine, le processeur étant agencé pour :
- recevoir un signal de sortie de la bobine provoqué par un champ magnétique agissant sur la bobine
- dériver des informations concernant la carte à partir du signal,
- mémoriser les informations, et
- transmettre ensuite les informations à l'environnement en transmettant un signal correspondant à la bobine,
dans lequel:
- l'étape de dérivation comprend l'étape consistant à estimer une position d'écriture des moyens d'enregistrement de la carte par rapport à la carte de transaction et/ou la bobine, pour au moins une partie des informations détectées par la bobine,
- l'étape de mémorisation comprend l'étape de mémorisation de ladite partie des informations et de ladite position estimée, et
- l'étape de transmission comprend les étapes consistant à sortir de ladite partie des informations vers la bobine lorsqu'une position estimée des moyens de lecture de carte par rapport à la carte de transaction et/ou la bobine est substantiellement identique à ladite position d'écriture enregistrée.

14. Procédé selon la revendication 13, dans lequel l'étape de réception comprend les étapes consistant à : déplacer des moyens d'enregistrement d'une carte, fournir un champ magnétique, le long de la carte de transaction et/ou de la bobine, et déterminer, à un ou plusieurs instants dans le temps, une ou plusieurs position(s) des moyens d'enregistrement d'une carte par rapport à la carte de transaction et/ou la bobine.

15. Procédé selon la revendication 13 ou 14, dans lequel l'étape de réception comprend l'estimation d'une vitesse de la carte de transaction et/ou de la bobine par rapport à un moyen de lecture et/ou d'enregistrement de la carte.

16. Procédé selon la revendication 15, dans lequel l'étape de réception comprend la détection d'un changement dans une inductance propre de la bobine et l'estimation de la vitesse sur la base du changement et une période durant laquelle le changement a eu lieu.

17. Procédé selon les revendications 15 ou 16, dans lequel l'étape de réception comprend : l'estimation, pour un ou plusieurs instants dans le temps, d'une ou de plusieurs position(s) des moyens de lecture et/ou d'enregistrement de la carte par rapport à la carte de transaction et/ou la bobine, à partir de la vitesse estimée et d'un instant dans le temps dans lequel les moyens de lecture et/ou d'enregistrement de la carte a passé une position de référence sur la carte de transaction et/ou la bobine.

18. Procédé selon l'une quelconque des revendications 13 à 17, dans lequel le processeur est agencé pour fonctionner en mode d'enregistrement, dans lequel le processeur est adapté pour interpréter un champ magnétique agissant sur la bobine comme étant une information, et dans lequel le processeur est agencé pour fonctionner en mode de non-enregistrement dans lequel des signaux de la bobine ne sont pas interprétés par le processeur.

19. Procédé selon l'une quelconque des revendications 13 à 18, dans lequel le processeur est agencé pour
- être soumis à une ou plusieurs séquence(s) d'enregistrement lors desquelles les informations détectées par la bobine sont mémorisées dans le processeur, et
- être soumis à une ou plusieurs séquence(s) de lecture lors desquelles les informations mémorisées dans le processeur sont sorties via la bobine.

20. Procédé selon les revendications 18 et 19, comprenant en outre l'étape consistant à : changer le mode de fonctionnement du processeur du mode d'enregistrement au mode de non-enregistrement sur la base d'au moins
- un nombre prédéterminé de séquence(s) d'enregistrement, et/ou
- un nombre prédéterminé de séquence(s) de lecture, et/ou
- un signal prédéterminé détecté au moyen de la bobine, et/ou
- une période prédéterminée du temps écoulé depuis une séquence de lecture et/ou d'enregistrement prédéterminée.

21. Procédé selon l'une quelconque des revendications 13 à 20, dans lequel la carte de transaction est agencée pour effectuer l'étape suivante consistant à : recevoir des informations supplémentaires et faire fonctionner le processeur en mode sécurisé dans lequel le processeur empêche la sortie des informations supplémentaires.

22. Procédé selon l'une quelconque des revendications 13-21, dans lequel la carte de transaction comprend en outre un scanner biométrique agencé pour déterminer au moins une propriété biométrique, et dans lequel l'étape de transmission comprend les étapes consistant à ::
- scanner un matériel biométrique avec le scanner biométrique,
- dériver des informations concernant le matériel biométrique, à partir d'un signal reçu depuis le scanner biométrique,
- comparer les informations concernant le signal de matériel biométrique avec une information concernant le propriétaire de la carte de transaction, et
- autoriser à transmettre à la bobine, des données mémorisées dans le processeur si les informations comparées correspondent.
